# EUROPÄISCHE PATENTSCHRIFT

(11) **EP 2 093 139 B1**
(45) Veröffentlichungstag und Bekanntmachung des Hinweises auf die Patenterteilung: **26.09.2012**
(21) Anmeldenummer: 09002317.7
(22) Anmeldetag: 19.02.2009
(51) Int. Cl.: B62M 9/10, F16H 55/30

(54) **Mehrfach-Kettenzahnrad für ein Fahrrad**
Multiple-chain gear wheel for a bicycle
Roue dentée à chaîne multiple pour un vélo

(30) Priorität: 23.02.2008 DE 102008010904
(43) Veröffentlichungstag der Anmeldung: 26.08.2009
(73) Patentinhaber: SRAM Deutschland GmbH, 97424 Schweinfurt (DE)
(72) Erfinder: Braedt, Henrik Dipl.-Ing., 97076 Würzburg (DE)

(56) Entgegenhaltungen:
- DE-A1- 3 625 594
- DE-A1- 10 225 977
- JP-A- 51 021 633
- JP-A- 51 021 634
- JP-U- 55 099 992
- US-A- 4 044 621
- US-A- 4 642 075
- US-A- 4 741 724
- US-A- 5 236 786
- US-A1- 2003 228 949
- US-A1- 2005 090 347

## Beschreibung

Die Erfindung betrifft ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei im Übergangsbereich von einem Zahnkranz zum nächst größeren Zahnkranz jeweils ein gedachtes ringförmiges Funktionselement gebildet wird, das am Umfang eine Vielzahl von Durchbrüchen aufweist.

Bei Mehrfach-Kettenzahnrädern der herkömmlichen Art wird eine Kassette, bestehend aus einer Vielzahl von Zahnkränzen mit unterschiedlichen Durchmessern auf einem Mitnehmer einer Nabe angeordnet. Die Zähne eines jeden Zahnkranzes kommen beim Betätigen der Schalteinrichtung abwechselnd in Eingriff mit der Kette und übertragen ein Drehmoment aus den Pedalkräften des Fahrers auf den Mitnehmer über ein Profil, das die Zahnkränze mit dem Mitnehmer drehfest verbindet. Jedes dieser Zahnkränze überträgt also individuell das Drehmoment auf den Mitnehmer, wodurch es sowohl im Bereich der Mitnahme am Profil des Mitnehmers, wie auch am Zahnkranz wegen der seitlich wirkenden Kräfte durch die meist nicht fluchtende Kette stärker und schwerer ausgebildet sein muss. Die Anforderungen im Radrennsport erfordern eine immer leichtere Bauweise für alle Elemente am Fahrrad, weshalb man die Zahnkränze mit Durchbrüchen versehen und leichtere Materialien eingesetzt hat.

Diese leichteren Materialien haben aber meist gegenüber gehärtetem Stahl Nachteile hinsichtlich Härte, Dehnung und Verschleiß, weshalb versucht wird, durch eine massivere Bauweise diese Nachteile auszugleichen. Hierdurch allerdings werden die Vorteile zumindest teilweise wieder geschmälert.

Aus der US-Patentschrift Nr. 4,642,075 ist ein Mehrfach-Kettenzahnrad mit unterschiedlich großen Zahnkränzen bekannt geworden, bei dem die Kette durch eine Schalteinrichtung von einem auf einen anderen Zahnkranz gewechselt werden kann. Es handelt sich hierbei um ein durch Stanzen und Prägen hergestelltes Doppelzahnrad mit angeformter Speichen-Schutzscheibe, das aus einer Platine einteilig hergestellt ist. Der kleinere der beiden Zahnkränze ist mit dem größeren durch radial verlaufende Stege verbunden, die jeweils radial innerhalb einer Zahnlücke beginnen und schräg am Innendurchmesser des größeren Zahnkranzes einlaufen. Das gezeigte Prinzip stellt eine kostengünstige Lösung für Mehrfach-Kettenzahnräder mit Zahnkränzen dar, die große Unterschiede in den Zähnezahlen aufweisen.

Auf ähnliche Weise wird ein Doppelzahnrad mit einer angeformten Speichen-Schutzscheibe gemäß der gattungsgemäßen US-Patentschrift Nr. 4,380,445 hergestellt. Es gilt das für die US-Patentschrift Nr. 4,642,075 Gesagte ohne Einschränkung.

In der japanischen Schrift JP 55 099992 U ist ein Kettenrad gezeigt, das einen Grundkörper für die Halterung der Zahnkränze 1 und 2 aufweist. Ein umlaufendes, in sich geschlossenes rohrförmiges Teil dient dabei als Verbindung in axialer Richtung zwischen den Abschnitten der Halterung unter den Zahnkränzen.

In der DE 36 25 594 A1 ist ein Herstellverfahren für ein elliptisches Zahnrad beschrieben, bei dem die Herstellkosten gering gehalten werden können. Die Verfahrensschritte enthalten unter anderem Ausstanzen, Umformen und Oberflächenbehandlung. Mit dem beschriebenen Herstellverfahren können kostenintensive Zerspanungsoperationen auf numerisch gesteuerten Fräsmaschinen vermieden werden.

Als Weiterentwicklung der vorgenannten Kassette wird ein Mehrfach-Kettenzahnrad vorgeschlagen, das sich hinsichtlich der Anzahl und der Zahnkränze von der vorgenannten Kassette nur unwesentlich unterscheidet, jedoch nur aus zwei Teilen besteht, die mit dem Mitnehmer der Nabe verbindbar sind. Der erste Teil ist der größte Zahnkranz, der an seinem kleinsten Durchmesser ein Profil aufweist, das zu dem des Mitnehmers passt und eine drehfeste Verbindung zwischen diesem und dem größten Zahnkranz bei der Montage gewährleistet.

Der zweite und wichtigere Teil ist ein Zahnkranz-Hohlkörper, der kegelig ausgeführt ist und alle übrigen Zahnkränze trägt. Mit diesen ist der Zahnkranz-Hohlkörper vom Zweitgrößten bis zum Kleinsten einteilig verbunden und weist an seinem kleinsten Durchmesser ebenfalls ein Profil auf, durch das es auf dem Mitnehmer der Nabe wenn nicht drehfest verbunden, so doch zentriert ist.

Der größte Zahnkranz und der Zahnkranz-Hohlkörper werden zu einer Einheit, wenn man beide Teile über eine ringförmige Verbindung zusammen bringt. Auf diese Weise ist funktionell kein Unterschied mehr zu den herkömmlichen Kassetten gegeben. Für die Verbindung kommen mehrere Fertigungsmethoden, beispielsweise Schweißen, Nieten, Fügen oder ähnliche Verfahren in Betracht, wobei allen das Ziel, nämlich die genaue Zentrierung der beiden Teile gemeinsam ist. Da große Drehmomente übertragen werden, ist auch die Genauigkeit hinsichtlich der Abstützung des größten Zahnkranzes und des Zahnkranz-Hohlkörpers auf dem Profil des Mitnehmers von großer Bedeutung.

Der Zahnkranz-Hohlkörper ist aus unterschiedlich großen kastenförmigen Funktionselementen aufgebaut, deren Durchmesser sich jeweils nach dem Zahnkranz richtet, der mit dem Funktionselement einteilig verbunden ist. Jedes Funktionselement weist einen scheibenförmigen Teil auf, der mit einem rohrförmigen Teil und dem Zahnkranz einen kastenförmigen Ring bildet. Durch die einteilige Verbindung aller Funktionselemente entsteht ein stabiler Zahnkranz-Hohlkörper, in dessen Umfang eine Vielzahl von Durchbrüchen eingearbeitet sind.

Diese Durchbrüche sind auf alle Funktionselemente verteilt und den Zahnlücken des jeweils kleineren Zahnkranzes zugeordnet. Dies bedeutet, dass ein Durchbruch von dieser Zahnlücke ausgeht, sich im rohrförmigen Teil fortsetzt, in den scheibenförmigen Teil übergeht und an den nächst größeren Zahn im nächst größeren Funktionselement heranreicht. Hierbei entstehen Stege, die die Form eines rechten Winkels aufweisen und in ihrer Breite aber im Zusammenspiel mit den am Umfang benachbarten Durchbrüchen ausreichend bemessen sind, um die von der Kette übertragenen Kräfte ohne bleibende Verformung des Zahnrad-Hohlkörpers zu übertragen.

Zum besseren Verständnis der Lage und Richtung dieser Stege wird deren Anbindung am kleineren Zahnkranz mit "erster Koppelpunkt" und am größeren Zahnkranz mit "zweiter Koppelpunkt" bezeichnet. Der erste Koppelpunkt liegt wie besprochen im Bereich der Zahnmitte des kleineren Zahnkranzes, wohingegen sich die Position des zweiten Koppelpunktes entsprechend dem Winkel des Steges am größeren Zahnkranz unabhängig von dessen Zähneanordnung ergibt. Es hat sich nämlich gezeigt, dass die Stege das Drehmoment am besten übertragen, wenn die zweiten Koppelpunkte am größeren Zahnkranz in einer Antriebsdrehrichtung voreilend gegenüber den ersten Koppelpunkten am kleineren Zahnkranz angeordnet sind, wodurch die Stege einen Winkel gegenüber einem Radialstrahl im scheibenförmigen Teil des Funktionselementes aufweisen.

Die Durchbrüche haben ferner den Zweck, das Gewicht des Mehrfach-Kettenzahnrades zu verringern und den Schmutz, der sich im Fahrbetrieb bei ungünstigen Bedingungen bilden kann, ins Innere des Zahnrad-Hohlkörpers abzuleiten. Dort kann sich der Schmutz nicht lange halten, da er zur Radmitte hin durch Fenster im größten Zahnkranz ausgeworfen wird. Schmutz bildet sich in den Zwischenräumen der Zahnkränze sowohl als zähes Gemisch von Öl und Staub über längere Zeit, als auch kurzzeitig bei Fahrten durch morastiges Gelände, wobei größere Mengen Schmutz zwischen die Zahnkränze und die Kette geraten können. Hier befördern die Rollen der Kette den Schmutz durch die Durchbrüche unter den Zahnlücken hindurch nach radial innen und halten das Kettengetriebe auch unter ungünstigen Bedingungen dauerhaft funktionstüchtig. Infolge der Anordnung der Durchbrüche auch in axialer Richtung durch das scheibenförmige Teil kann der Schmutz durch die Einwirkung der zugehörigen Kettenrolle auch in axialer Richtung verdängt werden.

Die Kraft der Kette wird auf einen der Zahnkränze übertragen und setzt sich im Zahnkranz-Hohlkörper zum jeweils nächst größeren Zahnkranz fort, bis die Kraft über die Verbindung auf den größten Zahnkranz übertragen wird, der endlich den Mitnehmer über das Profil antreibt. Es ist daher eine ausreichende Dimensionierung des Profils im größten Zahnkranz erforderlich, um Verschleiß und Flächenpressung über einen längeren Zeitraum beherrschbar zu machen.

Es wird schließlich noch ein Verfahren zur Herstellung des kegeligen Zahnkranz-Hohlkörpers vorgeschlagen. Der kegelige Zahnkranz-Hohlkörper soll aus dem Vollen herausgearbeitet werden oder durch Bearbeiten eines umgeformten Ausgangsteiles, was für die Drehoperation kein Problem darstellt. Hohe Anforderungen hingegen werden an die Werkzeuge der Fräsmaschinen und deren Automatisierung gestellt, wenn die Zahnlücken und vor allem die Durchbrüche bearbeitet werden sollen. Nachdem die Zähne herausgearbeitet sind, müssen einzelne von ihnen einer weiteren Fräsoperation unterzogen werden.

Es sind die Steighilfen, die beim Schalten das Umlegen der Kette von einem auf den anderen Zahnkranz erleichtern, die aber durch eine individuelle Fräsbearbeitung an den Stirnseiten der Zähne realisiert werden müssen.

Zur Zentrierung des Zahnkranz-Hohlkörpers auf dem Mitnehmer der Nabe wird an seinem kleinsten Durchmesser ein Profil angebracht, das vorzugsweise geräumt wird. Sollte der Zahnkranz-Hohlkörper nur zentriert werden müssen, so könnte der Arbeitsgang Räumen entfallen und der gedrehte Innendurchmesser als Zentrierung genügen. Außerdem ist eine geeignete Anformung zur Bildung einer Verbindung zwischen dem kegeligen Zahnkranz-Hohlkörper und einem eigenständigen größten Zahnkranz erforderlich. Diese wird gemeinsam mit den vorangegangenen Fräsoperationen erledigt. Schließlich wird der Zahnkranz-Hohlkörper einer Wärmebehandlung und einer Oberflächenbehandlung unterzogen, bevor die Montage des größten Zahnkranzes mit dem Zahnkranz-Hohlkörper über die Verbindung erfolgen kann.

Die Erfindung hat es sich zur Aufgabe gemacht, ein Mehrfach-Kettenzahnrad zu schaffen, das gegen herkömmliche Mehrfach-Kettenzahnräder austauschbar ist, Gewichtsvorteile aufweist und die Funktion beim Gangwechsel durch eine Schalteinrichtung auch unter ungünstigen Fahrbedingungen, beispielsweise im Gelände, beibehält.

Die Lösung der Aufgabe ist im kennzeichnenden Teil des Hauptanspruches beschrieben. Ausgestaltungen sind den Unteransprüchen zu entnehmen.

Anhand mehrerer Zeichnungen wird ein Mehrfach-Kettenzahnrad für eine Nabe am Hinterrad eines Fahrrades erläutert. Es zeigen
- Fig. 1: einen Ausschnitt aus einem Mehrfach-Kettenzahnrad mit einem Funktionselement und einem Zahnkranz im Schnitt;
- Fig. 2: die Position eines Durchbruchs und zweier Stege zu einer Zahnlücke am Zahnkranz eines Mehrfach-Kettenzahnrades im Schnitt;
- Fig. 3: den Zusammenbau eines größten Zahnkranzes mit einem Zahnkranz-Hohlkörper auf einem Mitnehmer einer Nabe als Skizze.

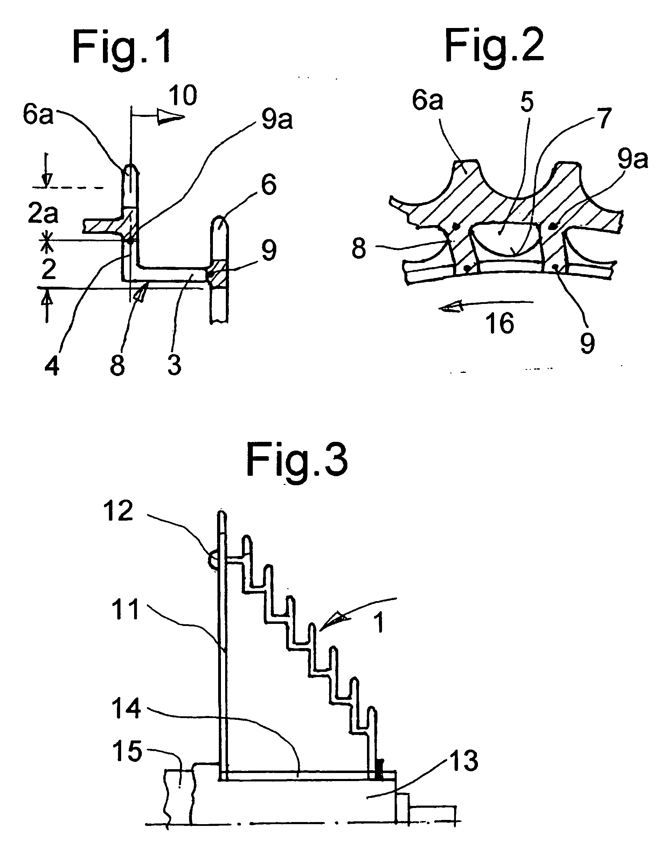

Wie aus der Fig.1 ersichtlich ist, weist ein Zahnkranz-Hohlkörper 1 ein Funktionselement 2 auf, das als kastenförmiger Ringkörper aufzufassen ist, der aus einem rohrförmigen Teil 3 und einem scheibenförmigen Teil 4 sowie aus einem einteilig mit dem rohrförmigen Teil 3 verbundenen Zahnkranz 6 besteht. An dieses Funktionselement 2 schließt sich ein nächst größeres Funktionselement 2a an, das mit einem nächst größeren Zahnkranz 6a einteilig verbunden ist, wobei sich die Abmessungen des neuen Ringkörpers mit Ausnahme der Durchmesser ähnlich sind.

Anhand der Fig. 2, die sich als Schnitt 10 aus der Fig. 1 darstellt, wird gezeigt, wie unterhalb des Zahnkranzes 6a im scheibenförmigen Teil 4 des Funktionselementes 2 ein Durchbruch 5 angeordnet ist, der sich an einer Zahnlücke 7 des kleineren Zahnkranzes 6 orientiert und in Verbindung mit benachbarten Durchbrüchen 5 jeweils Stege 8 erzeugt, die die beiden gezeigten Zahnkränze 6 und 6a verbinden. Wird die Anbindung eines solchen Steges 8 im Bereich der Zahnmitte des kleineren Zahnkranzes 6 als erster Koppelpunkt 9 bezeichnet, so ergibt sich ein zweiter Koppelpunkt 9a am Innendurchmesser des größeren Zahnkranzes 6a am Funktionselement 2a. Während der Steg 8 im rohrförmigen Teil 3 des Funktionselementes 2 im wesentlichen achsparallel verläuft, weicht er von seiner radialen Richtung nach außen insofern ab, als der zweite Koppelpunkt 9a am größeren Zahnkranz 6a in einer Antriebsdrehrichtung 16 voreilend gegenüber dem ersten Koppelpunkt 9 am kleineren Zahnkranz 6 angeordnet ist. Aus der Fig. 1 lässt sich schließlich die rechtwinklige Form des Steges 8 zwischen dem ersten Koppelpunkt 9 und dem zweiten Koppelpunkt 9a erkennen.

Es wird gemäß der Fig. 3 das Mehrfach-Kettenzahnrad, bestehend aus einem größten Zahnkranz 11 und dem kegeligen Zahnkranz-Hohlkörper 1 beschrieben, das auf einem Mitnehmer 13 einer Nabe 15 eines Fahrrades montierbar ist. Der größte Zahnkranz 11 wird mit dem Zahnkranz-Hohlkörper 1 lösbar oder unlösbar verbunden, wobei eine Verbindung 12 durch Schweißen, Fügen, Nieten, Stecken oder ähnliche Verfahren hergestellt wird. Zur Montage auf einem Profil 14 des Mitnehmers 13 weisen der größte Zahnkranz 11 und wahlweise der Zahnkranz-Hohlkörper 1 je ein Profil 14 auf, das das Mehrfach-Kettenzahnrad mit dem des Mitnehmer 13 drehfest fixiert.

Von Vorteil ist die erfindungsgemäße Anordnung der Durchbrüche 5 jeweils im Bereich der Zahnlücken 7 der kleineren Zahnkränze 6 zur selbsttätigen Entfernung von Schmutz bei Fahrten durch morastiges Gelände, wobei auch größere Mengen Schmutz von den Rollen der Kette durch die Durchbrüche 5 an den Zahnlücken 7 hindurch gepresst werden und das Kettengetriebe funktionstüchtig gehalten wird.

### Bezugszeichenliste

- 1.: Zahnkranz-Hohlkörper
- 2.: Funktionselement
- 2a.: Funktionselement
- 3.: rohrförmiger Teil
- 4.: scheibenförmiger Teil
- 5.: Durchbruch
- 6.: Zahnkranz
- 6a.: Zahnkranz
- 7.: Zahnlücke
- 8.: Steg
- 9.: erster Koppelpunkt
- 9a.: zweiter Koppelpunkt
- 10.: Schnitt
- 11.: größter Zahnkranz
- 12.: Verbindung
- 13.: Mitnehmer
- 14.: Profil
- 15.: Nabe
- 16.: Antriebsdrehrichtung

## Patentansprüche

1. Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei im Übergangsbereich von einem Zahnkranz zum nächst größeren Zahnkranz jeweils ein gedachtes ringförmiges Funktionselement gebildet wird, das am Umfang eine Vielzahl von Durchbrüchen aufweist;
wobei die Durchbrüche (5) im Funktionselement (2) den Zahnlücken (7) des kleineren Zahnkranzes (6) zugeordnet sind und
das Funktionselement (2) aus einem rohrförmigen Teil (3) und einem scheibenförmigen Teil (4) besteht, wobei der Zahnkranz (6) mit dem rohrförmigen Teil (3) einteilig verbunden ist;
wobei weiterhin die Durchbrüche (5) am Umfang des Funktionselementes (2) derart gestaltet sind, dass Stege (8) entstehen, die als Teile des Funktionselementes (2) die Verbindung zwischen den Zahnkränzen (6 und 6a) herstellen, wobei sie mit dem kleineren Zahnkranz (6) einen ersten Koppelpunkt (9) und mit dem größeren Zahnkranz (6a) einen zweiten Koppelpunkt (9a) ausbilden.
**dadurch gekennzeichnet,**
**dass** der erste Koppelpunkt (9) der Stege (8) im Bereich der Zahnmitte eines jeweils zugeordneten Zahnes des kleineren Zahnkranzes (6) angeordnet ist.

2. Mehrfach-Kettenzahnrad nach Anspruch 1,
**dadurch gekennzeichnet,**
**dass** die Funktionselemente (2, 2a, ...) sich treppenförmig aneinander reihen und auf diese Weise einen kegeligen Zahnkranz-Hohlkörper (1) bilden.

3. Mehrfach-Kettenzahnrad nach einem der Ansprüche 1 oder 2,
**dadurch gekennzeichnet,**
**dass** die Durchbrüche (5) im rohrförmigen Teil (3) wie auch im scheibenförmigen Teil (4) des Funktionselementes (2) durch ihre Anordnung Stege (8) in der Form eines rechten Winkels entstehen lassen.

4. Mehrfach-Kettenzahnrad nach einem der Ansprüche 1 bis 3,
**dadurch gekennzeichnet,**
**dass** die Durchbrüche (5) im rohrförmigen Teil (3) jeweils an die Zahnlücken (7) des nächst kleineren Zahnkranzes (6) heranreichen.

5. Mehrfach-Kettenzahnrad nach einem der Ansprüche 1 bis 4,
**dadurch gekennzeichnet,**
**dass** der zweite Koppelpunkt (9a) zur Anbindung des Steges (8) am größeren Zahnkranz (6a) gegenüber dem ersten Koppelpunkt (9) zu seiner Anbindung am kleineren Zahnkranz (6) in einer Antriebsdrehrichtung (16) voreilend angeordnet ist.

6. Mehrfach-Kettenzahnrad nach einem der Ansprüche 1 bis 5,
**dadurch gekennzeichnet,**
**dass** der größte Zahnkranz (11) und der Zahnkranz-Hohlkörper (1) an ihrer gegenseitigen ringförmigen Berührungsstelle Mittel aufweisen, mit Hilfe derer eine Verbindung (12) herstellbar ist, durch die der Zahnkranz-Hohlkörper (1) in radialer und axialer Richtung gegenüber dem größten Zahnkranz (11) festgelegt wird.

7. Mehrfach-Kettenzahnrad nach einem der Ansprüche 1 bis 6,
**dadurch gekennzeichnet,**
**dass** das aus dem größten Zahnkranz (11) und dem kegeligen Zahnkranz-Hohlkörper (1) bestehende Mehrfach-Kettenzahnrad über ein Profil (14) mit einem Mitnehmer (13) auf der Nabe (15) drehfest verbunden ist.

8. Verfahren zur Herstellung eines Mehrfach-Kettenzahnrades, insbesondere eines kegeligen Zahnkranz-Hohlkörpers, mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei im Übergangsbereich von einem Zahnkranz zum nächst größeren Zahnkranz jeweils ein gedachtes ringförmiges Funktionselement gebildet wird,
das aus einem rohrförmigen Teil (3), einem scheibenförmigen Teil (4) und einem mit dem rohrförmigen Teil einteilig verbundenen Zahnkranz (6) besteht und wobei dieses ringförmige Funktionselement (2) am Umfang eine Vielzahl von Durchbrüchen (5) aufweist, wodurch Stege (8) gebildet werden, die sich im rohrförmigen Teil (3) und im scheibenförmigen Teil (4) erstrecken und den Zahnlücken (7) zwischen den Zähnen des Zahnkranzes (6) am selben Funktionselement (2) zugeordnet sind;
**dadurch gekennzeichnet,**
**dass** mindestens ein Steg (8), der sich im rohrförmigen Teil (3) erstreckt, einen ersten Koppelpunkt (9) mit dem Bereich der Mitte eines Zahnes des kleineren Zahnkranzes (6) aufweist **gekennzeichnet durch** die folgenden Merkmale:
* Herstellung eines Rohteils für den kegeligen Zahnkranz-Hohlkörper (1) durch Drehen aus dem Vollen oder **durch** Überdrehen eines umgeformten Ausgangsteiles;
* Fräsen der Zahnlücken (7) eines jeden Zahnkranzes (6, 6a...);
* Anbringen von Steighilfen an den Zähnen **durch** individuelle Fräsbearbeitung;
* Anordnung geeigneter Anformungen zur Bildung einer Verbindung (12) zwischen dem kegeligen Zahnkranz-Hohlkörper (1) und einem größten Zahnkranz (11);
* Wärmebehandlung;
* Oberflächenbehandlung;
* Montage des größten Zahnkranzes (11) mit dem Zahnkranz-Hohlkörper (1) über die Verbindung (12).

## Claims

1. Multiple-chain gear wheel having sprocket wheels of different sizes intended to receive a chain and to transmit a circumferential force introduced by the chain onto a hub of a rear wheel of a bicycle, affording the opportunity to move the chain from one sprocket wheel to another by means of a gear change mechanism, wherein, in the area of transition from one sprocket wheel to the next larger sprocket wheel, in each case an intended ring-shaped functional element exhibiting a plurality of openings around its circumference is formed;
wherein the openings (5) in the functional element (2) are allocated to the tooth spaces (7) of the smaller sprocket wheel (6)
and the functional element (2) consists of a tubular part (3) and a disc-shaped part (4), wherein the sprocket wheel (6) is integrally connected with the tubular part (3);
wherein further the openings (5) on the circumference of the functional element (2) are configured in such a way that webs (8) are produced, which, as parts of the functional element (2), establish the connection between the sprocket wheels (6 and 6a), wherein they constitute a first coupling point (9) with the smaller sprocket wheel (6) and a second coupling point (9a) with the larger sprocket wheel(6a),
**characterized in that**
the first coupling point (9) of the webs (8) is arranged in the region of the centre of the tooth of a tooth of the smaller sprocket wheel (6) that is allocated in each case.

2. Multiple-chain gear wheel according to Claim 1, **characterized in that**
the functional elements (2, 2a, ...) are arranged next to one another in rows in a stepped manner and form a tapered sprocket wheel hollow body (1) in this way.

3. Multiple-chain gear wheel according to one of Claims 1 or 2,
**characterized in that**
the openings (5) in the tubular part (3) and also in the disc-shaped part (4) of the functional element (2) by the nature of their arrangement cause webs (8) to be produced in the form of a right angle.

4. Multiple-chain gear wheel according to one of Claims 1 to 3,
**characterized in that**
the openings (5) in the tubular part (3) extend in each case as far as the tooth spaces (7) of the next smaller sprocket wheel (6).

5. Multiple-chain gear wheel according to one of Claims 1 to 4,
**characterized in that**
the second connection point (9a) for the attachment of the web (8) to the larger sprocket wheel (6a) is arranged with a lead in a direction of rotation (16) of the drive in relation to the first connection point (9) for its attachment to the smaller sprocket wheel (6).

6. Multiple-chain gear wheel according to one of Claims 1 to 5,
**characterized in that**
the largest sprocket wheel (11) and the sprocket wheel hollow body (1) exhibit on their mutual ring-shaped point of contact a means, with the help of which a connection (12) can be produced, via which the sprocket wheel hollow body (1) is fixed in the radial and axial direction in relation to the largest sprocket wheel (11).

7. Multiple-chain gear wheel according to one of Claims 1 to 6,
**characterized in that**
the multiple-chain gear wheel produced from the largest sprocket wheel (11) and the tapered sprocket wheel hollow body (1) is non-rotatably connected via a profile (14) to a carrier (13) on the hub (15).

8. Method for the manufacture of a multiple-chain gear wheel, in particular a tapered sprocket wheel hollow body, having sprocket wheels of different sizes intended to receive a chain and to transmit a circumferential force introduced by the chain onto a hub of a rear wheel of a bicycle, affording the opportunity to move the chain from one sprocket wheel to another by means of a gear change mechanism, wherein an intended ring-shaped functional element is formed in each case in the area of transition from one sprocket wheel to the next larger sprocket wheel, which functional element consists of a tubular part (3), a disc-shaped part (4) and a sprocket wheel (6) that is integrally connected with the tubular part, the said ring-shaped functional element (2) exhibiting a plurality of openings (5) around its circumference, by means of which webs (8) are formed, which webs extend in the tubular part (3) and in the disc-shaped part (4) and are allocated to the tooth spaces (7) between the teeth of the sprocket wheel (6) on the functional element (2) itself;
**characterized in that**
at least one web (8), which extends in the tubular part (3), exhibits a first connecting point (9) with the area at the centre of a tooth of the smaller sprocket wheel (6) **characterized by** the following features:
* manufacture of a workpiece for the tapered sprocket wheel hollow body (1) by turning from a solid block or by skimming a preformed blank;
* milling the tooth spaces (7) of each sprocket wheel (6, 6a, ...);
* application of ramps to the teeth by milling individually;
* provision of suitably formed areas to produce a connection (12) between the tapered sprocket wheel hollow body (1) and a largest sprocket wheel (11);
* heat treatment;
* surface treatment;
* assembly of the largest sprocket wheel (11) to the sprocket wheel hollow body (1) via the connection (12).

## Revendications

1. Roue dentée à chaîne multiple comprenant des couronnes dentées de différentes tailles pour recevoir une chaîne et pour transférer une force circonférentielle introduite par celle-ci à un moyeu d'une roue arrière d'une bicyclette avec la possibilité de faire passer la chaîne par le biais d'un dispositif de changement de vitesse d'une couronne dentée à une autre, un élément fonctionnel annulaire imaginaire étant à chaque fois formé dans la région de transition d'une couronne dentée à la couronne dentée immédiatement plus grande, lequel élément fonctionnel présente sur la circonférence une pluralité d'orifices ; les orifices (5) étant associés dans l'élément fonctionnel (2) aux espaces entre les dents (7) de la plus petite couronne dentée (6), et
l'élément fonctionnel (2) se composant d'une partie de forme tubulaire (3) et d'une partie en forme de disque (4), la couronne dentée (6) étant connectée d'une seule pièce à la partie de forme tubulaire (3) ;
et les orifices (5) à la circonférence de l'élément fonctionnel (2) étant en outre configurés de telle sorte que des nervures (8) soient produites, lesquelles, en tant que parties de l'élément fonctionnel (2), établissent la liaison entre les couronnes dentées (6 et 6a), lesquelles nervures constituant avec la plus petite couronne dentée (6) un premier point d'accouplement (9) et avec la plus grande couronne dentée (6a) un deuxième point d'accouplement (9a), **caractérisée en ce que**
le premier point d'accouplement (9) des nervures (8) est disposé dans la région du centre des dents d'une dent respectivement associée de la plus petite couronne dentée (6).

2. Roue dentée à chaîne multiple selon la revendication 1,
**caractérisée en ce que**
les éléments fonctionnels (2, 2a, ...) sont alignés les uns contre les autres en forme d'escalier et forment de cette manière un corps creux de couronne dentée (1) de forme conique.

3. Roue dentée à chaîne multiple selon l'une quelconque des revendications 1 ou 2,
**caractérisée en ce que**
les orifices (5) dans la partie de forme tubulaire (3) ainsi que dans la partie en forme de disque (4) de l'élément fonctionnel (2) permettent de créer, par leur agencement, des nervures (8) en forme d'angle droit.

4. Roue dentée à chaîne multiple selon l'une quelconque des revendications 1 à 3,
**caractérisée en ce que**
les orifices (5) dans la partie de forme tubulaire (3) s'étendent à chaque fois jusqu'aux espaces entre les dents (7) de la plus petite couronne dentée immédiatement suivante (6).

5. Roue dentée à chaîne multiple selon l'une quelconque des revendications 1 à 4,
**caractérisée en ce que**
le deuxième point d'accouplement (9a) pour la liaison de la nervure (8) à la plus grande couronne dentée (6a) est disposé en avance par rapport au premier point d'accouplement (9) pour sa liaison à la plus petite couronne dentée (6), dans un sens de rotation d'entraînement (16).

6. Roue dentée à chaîne multiple selon l'une quelconque des revendications 1 à 5,
**caractérisée en ce que**
la plus grande couronne dentée (11) et le corps creux de couronne dentée (1) présentent, au niveau de leur point de contact de forme annulaire mutuel, des moyens à l'aide desquels une liaison (12) peut être établie, par laquelle le corps creux de couronne dentée (1) est fixé dans la direction radiale et axiale par rapport à la plus grande couronne dentée (11).

7. Roue dentée à chaîne multiple selon l'une quelconque des revendications 1 à 6,
**caractérisée en ce que**
la roue dentée à chaîne multiple constituée de la plus grande couronne dentée (11) et du corps creux de couronne dentée conique (1) est connectée de manière solidaire en rotation par le biais d'un profilé (14) à un dispositif d'entraînement (13) sur le moyeu (15).

8. Procédé de fabrication d'une roue dentée à chaîne multiple, en particulier d'un corps creux de couronne dentée conique, comprenant des couronnes dentées de différentes tailles pour recevoir une chaîne et pour transférer une force circonférentielle introduite par celle-ci à un moyeu d'une roue arrière d'une bicyclette avec la possibilité de faire passer la chaîne par le biais d'un dispositif de changement de vitesse d'une couronne dentée à une autre, un élément fonctionnel annulaire imaginaire étant à chaque fois formé dans la région de transition d'une couronne dentée à la couronne dentée immédiatement plus grande,
lequel élément fonctionnel se composant d'une partie de forme tubulaire (3), d'une partie en forme de disque (4) et d'une couronne dentée (6) connectée d'une seule pièce à la partie de forme tubulaire, et cet élément fonctionnel de forme annulaire (2) présentant sur la circonférence une pluralité d'orifices (5) par le biais desquels sont formées des nervures (8) qui s'étendent dans la partie de forme tubulaire (3) et dans la partie en forme de disque (4) et qui sont associées aux espaces entre les dents (7) entre les dents de la couronne dentée (6) sur le même élément fonctionnel (2),
**caractérisé en ce**
**qu'**au moins une nervure (8), qui s'étend dans la partie de forme tubulaire (3), présente un premier point d'accouplement (9) avec la région du centre d'une dent de la plus petite couronne dentée (6), **caractérisé par** les caractéristiques suivantes :
- fabrication d'une pièce brute pour le corps creux de couronne dentée conique (1) par tournage dans la masse ou par finition par tournage d'une pièce de base façonnée ;
- fraisage des espaces entre les dents (7) de chaque couronne dentée (6, 6a...) ;
- montage d'auxiliaires de montée sur les dents par usinage individuel par fraisage ;
- agencement de façonnages appropriés pour former une liaison (12) entre le corps creux de couronne dentée conique (1) et une couronne dentée plus grande (11) ;
- traitement thermique ;
- traitement de surface ;
- montage de la plus grande couronne dentée (11) avec le corps creux de couronne dentée (1) par le biais de la liaison (12).
